(19) Europäisches Patentamt

European Patent Office

Office européen des brevets

(11) Numéro de publication : **0 333 572 B1**

(12) **FASCICULE DE BREVET EUROPEEN**

(45) Date de publication du fascicule du brevet :
**02.09.92 Bulletin 92/36**

(21) Numéro de dépôt : **89400689.9**

(22) Date de dépôt : **13.03.89**

(51) Int. Cl.⁵ : **H02P 5/165,** G01P 3/48

---

(54) **Dispositif de mise en forme et d'exploitation des ondulations de courant d'induit générées par un moteur à courant continu, notamment pour commande de positionnement.**

---

(30) Priorité : **15.03.88 FR 8803325**

(43) Date de publication de la demande :
**20.09.89 Bulletin 89/38**

(45) Mention de la délivrance du brevet :
**02.09.92 Bulletin 92/36**

(84) Etats contractants désignés :
**DE ES FR GB IT**

(56) Documents cités :
**EP-A- 0 090 152
EP-A- 0 213 992
DE-A- 3 234 683**

(56) Documents cités :
**DE-A- 3 244 412
ELEKTRONIC, vol. 33, no. 25, 14 décembre
1984, pages 71-72, Munich, DE; M. BIRK:
"Unkonventionelle Drehzahlmessung und-regelung bei Gleichstrommotoren"**

(73) Titulaire : **JAEGER
2, rue Baudin
F-92303 Levallois-Perret (FR)**

(72) Inventeur : **Roussel, Pierre
44, rue Perronet
F-92200 Neuilly-sur-Seine (FR)**

(74) Mandataire : **Martin, Jean-Jacques et al
Cabinet REGIMBEAU 26, Avenue Kléber
F-75116 Paris (FR)**

EP 0 333 572 B1

Il est rappelé que : Dans un délai de neuf mois à compter de la date de publication de la mention de la
délivrance du brevet européen toute personne peut faire opposition au brevet européen délivré, auprès
de l'Office européen des brevets. L'opposition doit être formée par écrit et motivée. Elle n'est réputée
formée qu'après paiement de la taxe d'opposition (Art. 99(1) Convention sur le brevet européen).

Jouve, 18, rue Saint-Denis, 75001 PARIS

## Description

La présente invention concerne le domaine des dispositifs de commande de moteurs à courant continu.

La présente invention a pour but de proposer des moyens permettant de mettre en forme les ondulations de courant d'induit générées par un moteur à courant continu, en vue d'une exploitation ultérieure par comptage pour la commande de positionnement d'un organe mobile entraîné par le moteur.

On a déjà proposé dans le document FR-A-2 585 200 de détecter la composante périodique du courant d'alimentation d'induit d'un moteur à courant continu et de compter le nombre de périodes de cette composante périodique pour contrôler la position de l'induit et donc la position d'un organe mobile associé à celui-ci. On sait en effet que la composante périodique du courant d'induit est générée par la commutation périodique des balais du moteur. Le nombre d'oscillations du courant d'induit générées à partir d'une position de référence connue est donc directement représentatif de la position instantanée du moteur. Le principe évoqué dans le document FR-A-2 585 200 est séduisant en théorie car il permet d'assurer une commande de positionnement sans exiger de capteurs auxiliaires, tels que capteurs optiques, capteurs à effet Hall ou équivalents classiquement utilisés pour contrôler la position du moteur.

Dans le cadre non limitatif du domaine automobile, le comptage des ondulations de courant d'induit peut être utilisé par exemple pour contrôler le positionnement d'organes mobiles tels que rétroviseurs, sièges, colonnes de direction, éléments de contrôle de climatisation...

Cependant on constate dans la pratique que le courant d'induit d'un moteur à courant continu est fortement parasité.

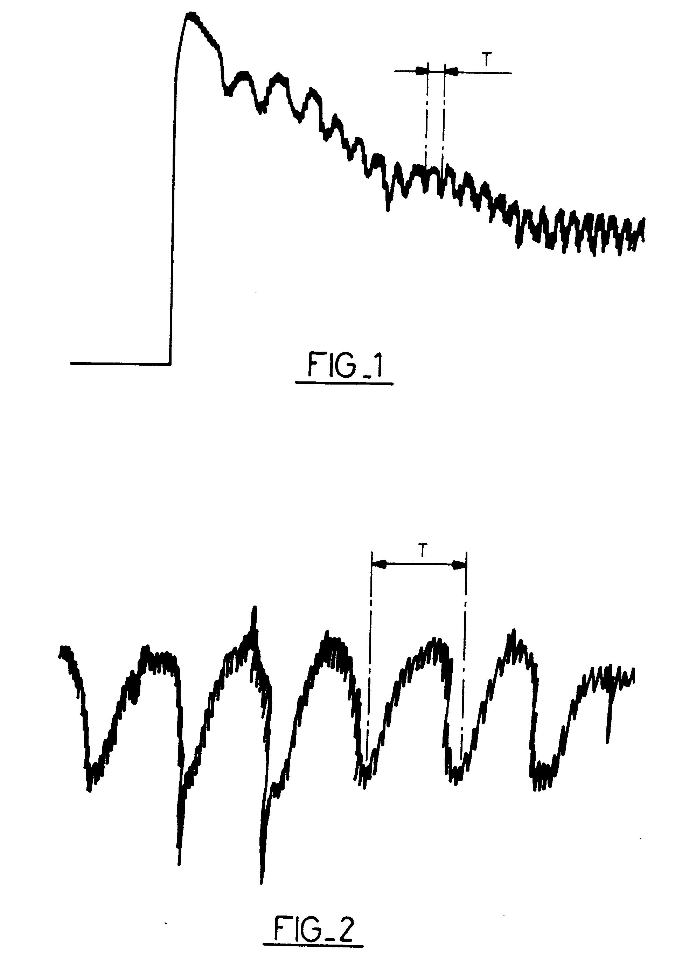

On a illustré sur la figure 1 annexée le courant d'induit d'un moteur à courant continu pendant une phase de démarrage et sur la figure 2 annexée, à échelle agrandie, le courant d'induit d'un moteur à courant continu, en régime normal de fonctionnement. Après une phase de démarrage pendant laquelle une pointe de courant est appelée dans le circuit d'induit du moteur, en régime normal de fonctionnement, l'intensité se stabilise à une valeur pratiquement constante, pour une charge mécanique donnée du moteur, une composante périodique générée par la commutation des balais se superposant à la valeur sensiblement constante. La période de cette composante est référencée T sur les figures 1 et 2 annexées.

On note à l'examen des figures 1 et 2 que le courant d'induit présente en outre de nombreux parasites aléatoires (harmoniques ou artéfacts). Ces parasites s'ils sont pris en compte par les moyens de comptage conduisent à un calcul erroné des périodes d'oscillations du courant d'induit, donc à un positionnement erroné.

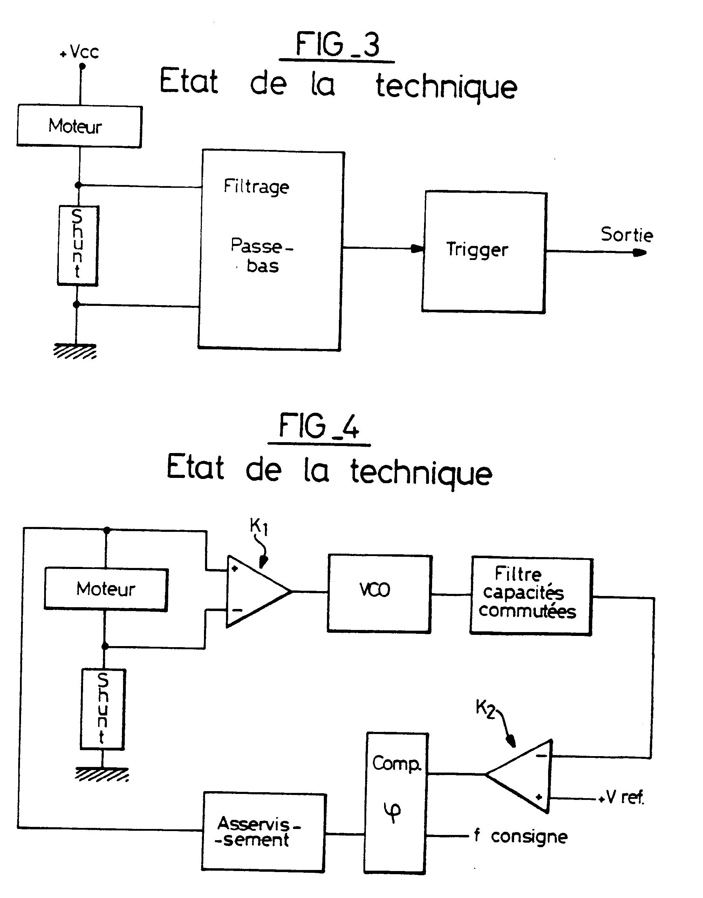

On a tenté d'éliminer les parasites superposés au courant d'induit d'un moteur à courant continu à l'aide du circuit illustré sur la figure 3 annexée, en filtrant dans un filtre passe bas, le signal représentatif du courant d'induit prélevé aux bornes d'un shunt connecté en série de l'induit puis en appliquant le signal filtré dans un étage trigger.

Toutefois, le circuit illustré sur la figure 3 reste très sensible aux harmoniques et aux parasites de forte intensité. Le taux d'erreur dans le comptage des ondulations du courant d'induit, varie entre 1 et 30 % selon l'état du moteur et l'environnement électromagnétique.

La présente invention a pour but d'éliminer cet inconvénient.

Elle propose à cet effet d'intégrer une boucle à verrouillage de phase au dispositif de mise en forme des ondulations du courant d'induit générées par un moteur à courant continu, cette boucle à verrouillage de phase recevant en entrée un signal dérivé du courant d'induit du moteur et produisant en sortie un signal à la fréquence fondamentale des ondulations du courant d'induit du moteur.

On a constaté que l'utilisation d'une boucle à verrouillage de phase permet de minimiser les erreurs sur le comptage des périodes d'oscillation.

Selon une autre caractéristique de l'invention, le dispositif de mise en forme comprend un filtre passe bas placé en amont de la boucle à verrouillage de phase.

Selon une autre caractéristique avantageuse de l'invention, le dispositif de mise en forme comprend des moyens aptes à générer un signal proportionnel à la f.c.e.m. du moteur et à piloter la fréquence de la boucle à verrouillage de phase sur la base du signal ainsi obtenu.

Selon une autre caractéristique avantageuse de l'invention, le dispositif de mise en forme comprend des moyens aptes à générer un signal proportionnel à la f.c.e.m. du moteur, un oscillateur contrôlé en tension piloté par le signal proportionnel à la f.c.e.m. et un filtre à capacités commutées piloté par la sortie de l'oscillateur, placé en amont de la boucle à verrouillage de phase. Le filtre à capacités commutées peut être un filtre passe bas ou passe bande. Ainsi le signal appliqué à l'entrée de la boucle à verrouillage de phase transite par un filtre dont la fréquence de coupure est pilotée proportionnellement à la vitesse de rotation du moteur puisque la f.c.e.m. est proportionnelle à cette grandeur (fcem = $k \phi w$, k = constante, $\phi$ flux, w = vitesse de rotation du moteur). Ainsi les harmoniques sont atténués en entrée de la boucle à verrouillage de phase, quelle que soit la vitesse de rotation du moteur.

La présente invention concerne également un dispositif d'exploitation des ondulations de courant générées par un moteur à courant continu qui comprend un dispositif de mise en forme incorporant une boucle à verrouillage de phase, comme indiqué précédemment, des moyens de comptage du nombre d'oscillations du signal issu du dispositif de mise en forme, et des moyens aptes à comparer le nombre d'oscillations compté à une valeur de référence pour contrôler l'arrêt du moteur.

L'article de M. Birk publié le 14 décembre 1984 dans Elektronik vol.33, n° 25, pages 71-72 (unkonventionelle Drehzahlmessung und -regelung bei Gleichstrommotoren) décrit un circuit d'asservissement pour moteur à courant continu qui présente une certaine analogie structurelle avec la présente invention. Le circuit proposé dans ce document est illustré sur la figure 4 annexée. On aperçoit sur cette figure 4 un shunt connecté en série de l'induit du moteur à courant continu. Un comparateur $K_1$ reçoit sur ses entrées respectivement la tension d'alimentation du moteur et la tension prélevée aux bornes du shunt. La tension issue du comparateur $K_1$ est dirigée vers un oscillateur commandé en tension (VCO) qui pilote un filtre à capacités commutées. Le signal issu de ce filtre est appliqué sur la première entrée d'un second comparateur $K_2$. La seconde entrée du comparateur $K_2$ reçoit une tension de référence Vref. Le signal issu du comparateur $K_2$ est appliqué sur la première entrée d'un comparateur de phase. La seconde entrée du comparateur de phase reçoit une fréquence de consigne. Le signal de sortie du comparateur de phase sert à piloter le circuit d'asservissement de la tension d'alimentation du moteur.

On notera cependant que le document Elektronik précité n'enseigne pas d'utiliser une boucle à verrouillage de phase : qu'il n'enseigne pas de compter les ondulations de courant d'induit d'un moteur à courant continu ; qu'un tel comptage d'ondulations de courant d'induit ne présenterait d'ailleurs aucun intérêt dans le contexte du document Elektronik puisque ce document a précisément pour but de réguler la vitesse de rotation du moteur.

D'autres caractéristiques, buts et avantages de la présente invention apparaîtront à la lecture de la description détaillée qui va suivre, et en regard des dessins annexés, donnés à titre d'exemples non limitatifs et sur lesquels :

– les figures 1 et 2 représentent, comme indiqué précédemment, le courant d'induit d'un moteur à courant continu,

– les figure 3 et 4 précédemment décrites illustrent l'état de la technique,

– -les figures 5, 6 et 7 représentent, sous forme de blocs fonctionnels schématiques, trois variantes de réalisation d'un dispositif de mise en forme conforme à la présente invention, et

– les figures 8, 9 et 10 représentent les schémas détaillés de ces trois variantes de réalisation respectivement.

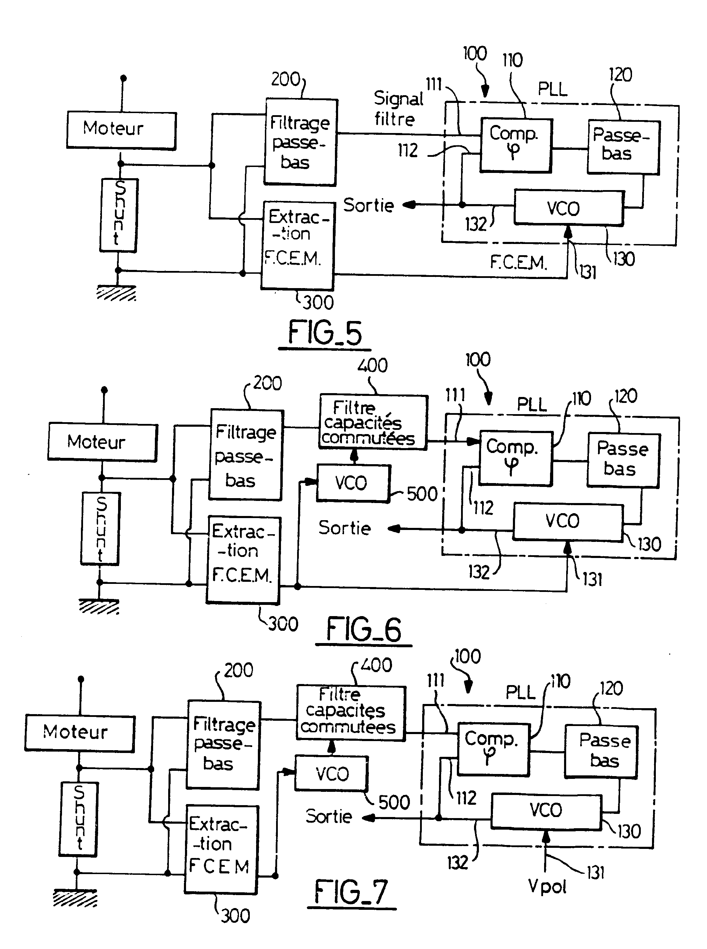

Chacun des trois dispositifs de mise en forme illustrés les figures 5, 6 et 7 annexées comprend une boucle à verrouillage de phase 100 (dénommée généralement PLL).

On rappelle qu'une boucle à verrouillage de phase comprend un comparateur de phase 110, un filtre passe bas 120 et un oscillateur commandé en tension 130. Le comparateur de phase 110 reçoit sur une première entrée 111 le signal à traiter et sur une seconde entrée 112 le signal issu de la sortie 132 de l'oscillateur 130.

Le signal de sortie du comparateur de phase 110 est appliqué à l'entrée du filtre passe bas 120. La sortie du filtre passe bas 120 pilote l'oscillateur 130. La sortie de la boucle à verrouillage de phase 100 est formée par la sortie 132 de l'oscillateur commandé en tension 130.

Sur les figures 5, 6 et 7 annexées, on a représenté schématiquement un moteur à courant continu et un shunt connecté en série de son induit. La tension prélevée aux bornes du shunt est ainsi directement proportionnelle au courant d'induit du moteur à courant continu.

Les trois dispositifs de mise en forme conformes à la présente invention illustrés respectivement sur les figures 5, 6 et 7 comprennent chacun un filtre passe bas 200 et un circuit 300 d'extraction d'un signal représentatif de la force contre-électromotrice du moteur (f.c.e.m.). Le filtre passe bas 200 et le circuit 300 ont leurs entrées connectées aux bornes du shunt.

Selon la première variante de réalisation illustrée sur la figure 5 annexée les ondulations de courant d'induit, après filtrage dans le filtre passe bas 200, sont appliquées à l'entrée de la boucle à verrouillage de phase 100, plus précisément sur l'entrée 111 du comparateur de phase 110, tandis que l'oscillateur 130 est piloté sur son entrée auxiliaire 131 par le signal issu du circuit 300. Ainsi, la fréquence centrale de la boucle à verrouillage de phase 100 est pilotée au plus près de la fondamentale des ondulations du courant d'induit. Cette disposition évite un accrochage de la boucle à verrouillage de phase 100 sur une harmonique.

Selon la seconde variante de réalisation illustrée sur la figure 6 annexée, les ondulations de courant d'induit filtrées dans le filtre passe bas 200 transitent par un filtre à capacités commutées 400 avant d'être appliqué à l'entrée 111 de la boucle à verrouillage de phase 100. Le filtre à capacités commutées 400 est piloté par un oscillateur commandé en tension 500, lui-même piloté en entrée par le signal issu du circuit 300 d'extraction de f.c.e.m.

L'oscillateur commandé en tension 130 de la boucle à verrouillage de phase 100 reste piloté par le signal issu du circuit 300.

Le filtre a capacités commutées 400 peut être du type passe bas ou passe bande. Ce filtre à capacités commutées 400, dont la fréquence de coupure est pilotée par le VCO 500 proportionnellement à la fréquence des ondulations de base du courant d'induit permet d'atténuer les harmoniques du signal appliqué sur l'entrée 111 de la boucle à verrouillage de phase 100.

Dans le cadre de la troisième variante de réalisation conforme à la présente invention illustrée sur la figure 7, les ondulations de courant issues du filtre passe bas 200 transitent également par un filtre à capacités commutées 400 avant d'être appliquées à l'entrée 111 de la boucle à verrouillage de phase 100. De même, le filtre à capacités commutées 400 est piloté par un VCO 500, lui-même piloté en entrée par le signal issu du circuit d'extraction de force contre-électromotrice 300. Par contre, dans le cadre de ce troisième mode de réalisation, le VCO 130 de la boucle à verrouillage de phase 100 n'est plus piloté par le signal issu du circuit 300, mais par une tension de polarisation Vpol définie pour centrer la fréquence de la boucle à verrouillage de phase 100 sur la fréquence centrale attendue des ondulations du courant d'induit et ouvrir la bande passante de la boucle à verrouillage de phase 100.

Dans les trois modes de réalisation illustrés sur les figures 5, 6 et 7, la sortie du dispositif de mise en forme correspond à la sortie de la boucle à verrouillage de phase 100, c'est-à-dire à la sortie 132 du VCO 130. En effet, le signal obtenu à la sortie 132 de la boucle à verrouillage de phase 100 correspond à un signal logique coïncidant avec la composante périodique du courant d'induit générée par la commutation des balais du moteur à courant continu.

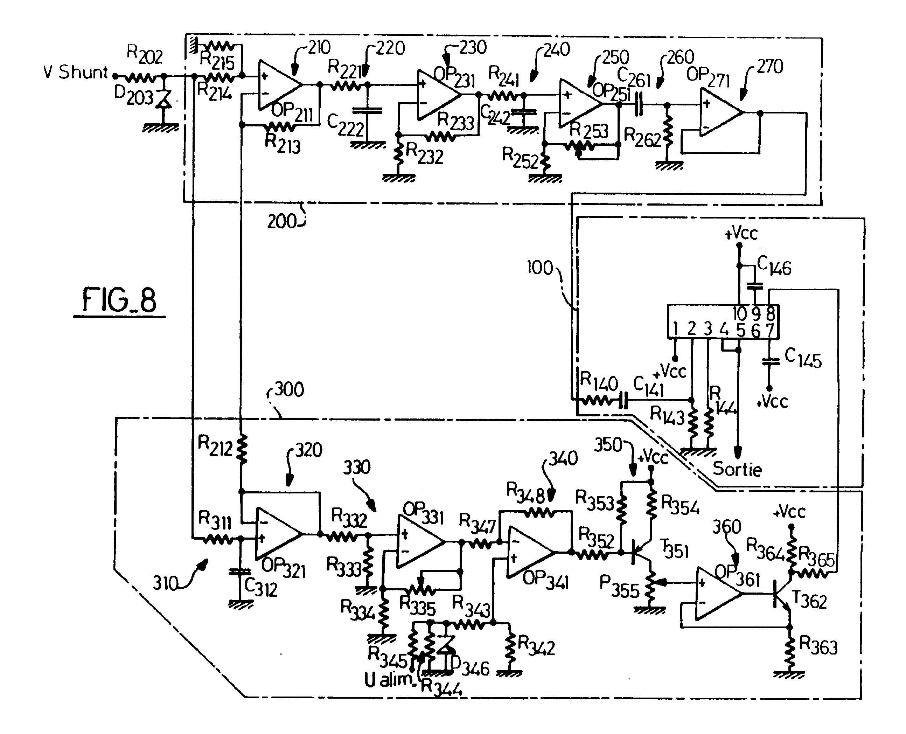

On va maintenant décrire dans le détail le mode de réalisation illustré sur la figure 8 annexée, qui correspond à la première variante de réalisation illustrée sur la figure 5.

Le dispositif de mise en forme illustré sur la figure 8 comprend une cellule de protection en entrée comprenant une résistance R 202 et une diode zener D 203. La tension V shunt, prélevée aux bornes du shunt connecté en série de l'induit du moteur, est appliquée sur une première borne de la résistance R 202. La diode zener D 203 relie la seconde borne de la résistance R 202 à la masse. De plus, la seconde borne de la résistance R 202 attaque le filtre basse pas 200 et le circuit 300.

La cellule de protection R 202-D 203 évite l'application de surtension sur les circuits 200 et 300.

Le circuit 200 comprend connectés en série entre la sortie de la cellule de protection R 202-D 203 et la boucle à verrouillage de phase 100 : un étage soustracteur 210, un filtre passe bas 220, un étage amplificateur 230, un étage passe bas 240, un étage amplificateur 250, un étage passe haut 260 et un étage amplificateur suiveur 270.

Le circuit 300 comprend connectés entre la sortie de la cellule de protection R 202-D 203 et la boucle à verrouillage de phase 100 : un filtre passe bas 310, un étage amplificateur suiveur 320, un étage amplificateur 330, un étage soustracteur 340, un étage inverseur 350 et un étage de transformation tension-courant 360.

L'étage 320 comprend un amplificateur opérationnel OP 321.

Le filtre passe bas 310 comprend une résistance R 311 et une capacité C 312. La résistance R 311 est reliée entre le point commun à la résistance R 202 et la diode zener D 203, d'une part, et l'entrée non inverseuse de l'amplificateur opérationnel OP 321, d'autre part. La capacité C 312 est reliée entre l'entrée non inverseuse de l'amplificateur OP 321 et la masse du montage.

L'entrée inverseuse de l'amplificateur opérationnel OP 321 est rebouclée directement sur la sortie de ce dernier. Ainsi l'étage amplificateur suiveur 320 génère à sa sortie un signal représentatif du courant d'induit moyen.

L'étage 210 comprend un amplificateur opérationnel OP 211. L'entrée inverseuse de celui-ci est réliée à la sortie de l'amplificateur opérationnel OP 321 par l'intermédiaire d'une résistance de liaison R 212.

L'entrée inverseuse de l'amplificateur opérationnel OP 211 est bouclée sur sa sortie par l'intermédiaire d'une résistance R 213. L'entrée non inverseuse de l'amplificateur opérationnel OP 211 est reliée, d'une part, par l'intermédiaire d'une résistance R 214 au point commun à la résistance R 202 et à la diode D 203, d'autre part, par l'intermédiaire d'une résistance R 215 à la masse du montage.

L'étage soustracteur 210 sert à retrancher la composante moyenne du courant d'induit, issue de l'étage amplificateur suiveur 320, du signal prélevé aux bornes du shunt. Ainsi le signal issu de l'étage soustracteur 210 représente les composantes périodiques du courant d'induit.

Le filtre passe bas 220 comprend une résistance R 221 et une capacité C 222.

L'étage amplificateur 230 comprend un amplificateur opérationnel OP 231 et deux résistances R 232, R 233.

La résistance R 221 relie la sortie de l'amplificateur opérationnel OP 211 a l'entrée non inverseuse de l'amplificateur opérationnel OP 231.

L'entrée inverseuse de l'amplificateur opérationnel OP 231 est reliée à la masse du montage par l'intermédiaire de la résistance R 232. De plus, l'entrée inverseuse de l'amplificateur opérationnel OP 231 est rebouclée sur sa sortie par l'intermédiaire de la résistance R 233.

Le filtre passe bas 240 comprend une résistance R 241 et une capacité C 242. L'étage amplificateur 250 comprend un amplificateur opérationnel OP 251, une résistance R 252 et une résistance variable R 253. La résistance R 241 relie la sortie de l'amplificateur opérationnel OP 231 à l'entrée non inverseuse de l'amplificateur opérationnel OP 251. La capacité C 242 est reliée entre l'entrée non inverseuse de l'amplificateur opérationnel OP 251 et la masse du montage. L'entrée inverseuse de l'amplificateur opérationnel OP 251 est reliée à la masse du montage par l'intermédiaire de la résistance R 252. L'entrée inverseuse de l'amplificateur opérationnel OP 251 est bouclée sur sa sortie par l'intermédiaire de la résistance variable R 253.

Le filtre passe haut 260 comprend une capacité C 261 et une résistance R 262.

L'étage amplificateur 270 comprend un amplificateur opérationnel OP 271.

La capacité C 261 est reliée entre la sortie de l'amplificateur opérationnel OP 251 et l'entrée non inverseuse de l'amplificateur opérationnel OP 271.

L'entrée non inverseuse de l'amplificateur opérationnel OP 271 est reliée à la masse du montage par l'intermédiaire de la résistance R 262.

L'entrée inverseuse de l'amplificateur opérationnel OP 271 est rebouclée directement sur la sortie de ce dernier.

L'étage amplificateur 330 comprend un amplificateur opérationnel OP 331. L'entrée non inverseuse de celui-ci est reliée, d'une part, à la sortie de l'amplificateur opérationnel OP 321 par l'intermédiaire d'une résistance R 332, d'autre part, à la masse du montage par l'intermédiaire d'une résistance R 333.

L'entrée inverseuse de l'amplificateur opérationnel OP 331 est reliée à la masse du montage par l'intermédiaire d'une résistance R 334. L'entrée inverseuse de OP 331 est par ailleurs reliée à sa sortie par l'intermédiaire d'une résistance ajustable R 335.

L'étage soustracteur 340 a pour but de soustraire de la tension d'alimentation du moteur un signal représentant le produit du courant moyen d'induit par la somme de la résistance du shunt et de la résistance interne du moteur à courant continu.

L'étage soustracteur 340 comprend un amplificateur opérationnel OP 341. L'entrée non inverseuse de l'amplificateur opérationnel OP 341 reçoit un signal lié à la tension d'alimentation du moteur à courant continu.

Cette entrée non inverseuse de OP 341 est reliée à la masse du montage par une résistance R 342. L'entrée non inverseuse de OP 341 est par ailleurs reliée à la première borne d'une résistance R 343. La seconde borne de la résistance R 343 est reliée à la masse du montage par l'intermédiaire d'une cellule comprenant en parallèle une résistance R 344 et une diode zener D 346. De plus, la seconde borne de la résistance R 343 est reliée à la tension d'alimentation du moteur Ualim par l'intermédiaire d'une résistance R 345.

L'entrée inverseuse de OP 341 est reliée à la sortie de OP 331 par l'intermédiaire d'une résistance R 347. L'entrée inverseuse de OP 341 est de plus rebouclée sur sa sortie par l'intermédiaire d'une résistance R 348.

L'étage inverseur 350 comprend un transistor PNP T 351. La base du transistor T 351 est reliée à la sortie de OP 341 par l'intermédiaire d'une résistance R 352. La base du transistor T 351 est reliée à une borne d'alimentation positive +Vcc par l'intermédiaire d'une résistance R 353. L'émetteur de T 351 est relié à cette borne +Vcc par l'intermédiaire d'une résistance R 354. Le collecteur de T 351 est relié à la masse du montage par l'intermédiaire d'un potentiomètre P 355. L'étage de transformation tension courant 360 comprend un amplificateur opérationnel OP 361 et un transistor NPN T 362.

Le curseur du potentiomètre P 355 est relié à l'entrée non inverseuse de OP 361. La sortie de OP 361 attaque la base du transistor T 362. L'émetteur de T 362 est relié à l'entrée inverseuse de OP 361. De plus, l'émetteur de T 362 est relié à la masse du montage par l'intermédiaire d'une résistance R 363. Le collecteur de T 362 est relié à la borne d'alimentation positive +Vcc par l'intermédiaire d'une résistance R 364.

Le signal représentant les ondulations de courant d'induit générées par la commutation des balais du moteur à courant continu, filtré par le filtre passe bas 200 et destiné à être appliqué à l'entrée de la boucle à verrouillage de phase 100, est disponible sur la sortie de OP 271. Par ailleurs, le signal représentatif de la f.c.e.m. du moteur destiné à piloter le VCO de la boucle à verrouillage de phase 100 est disponible sur le collecteur du transistor T 362.

Selon le mode de réalisation illustré sur la figure 8 annexée, la boucle à verrouillage de phase 100 est formée d'un circuit intégré type LM 565.

L'entrée 111 de la boucle à verrouillage de phase 100 illutrée sur les figures 5, 6 et 7 correspond à la borne 2 du circuit LM 565. Cette borne 2 est reliée à la sortie de OP 271 par l'intermédiaire d'une branche comprenant en série une résistance R 140 et une capacité C 141. L'entrée pilote, référencée 131 sur les figures 5, 6 et 7, du VCO 130 intégré à la boucle de verrouillage de phase 100 correspond à la borne 8 du circuit LM 565. Cette borne 8 est reliée au collecteur du transistor T 362 par l'intermédiaire de la résistance R 365. On notera par ailleurs que de préférence, comme illustré sur la figure 8 annexée, le circuit LM 565 qui constitue la boucle à verrouillage de phase 100 a sa borne 1 reliée à une source d'alimentation positive +Vcc, sa borne 2 d'entrée reliée à la masse du montage par l'intermédiaire d'une résistance R 143, sa borne 3 reliée à la masse du montage par l'intermédiaire d'une résistance R 144, sa borne 7 reliée à une borne d'alimentation positive +Vcc par l'intermédiaire d'une capacité C 145, sa borne 9 reliée à une source d'alimentation positive +Vcc par l'intermédiaire d'une capacité C 146 et sa borne 10 reliée directement à la même source d'alimentation positive +Vcc.

La sortie du dispositif de mise en forme est prélevée sur les sorties 4 et 5 du circuit LM 565 reliées entre elles.

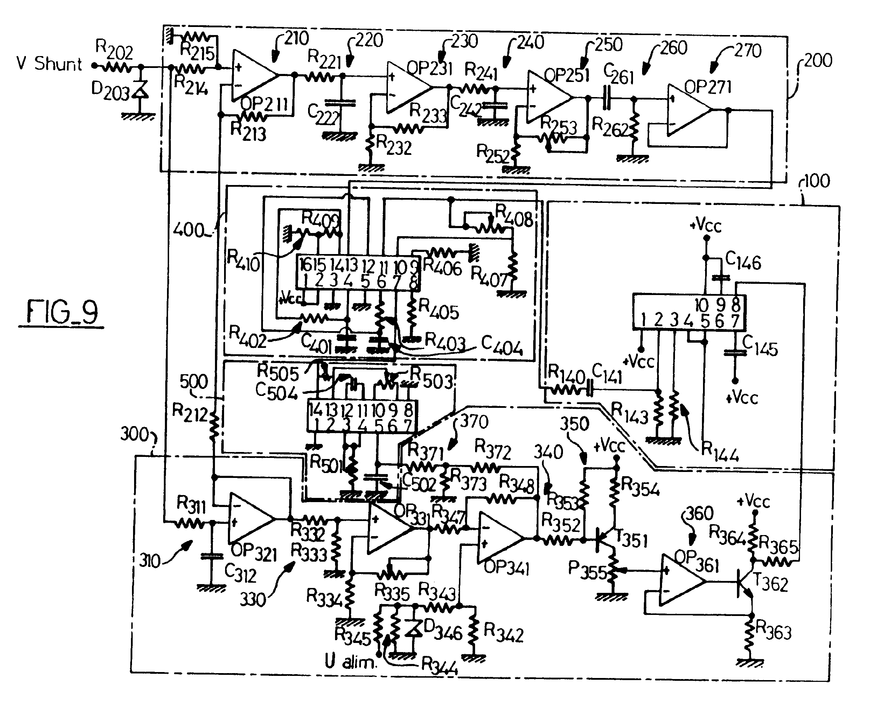

On va maintenant décrire le second mode de réalisation conforme à la présente invention illustré sur la figure 9 annexée.

Le dispositif de mise en forme illustré sur la figure 9 annexée comprend une cellule de protection d'entrée R 202-D 203, un filtre passe bas 200, un circuit d'extraction de f.c.e.m. 300 et une boucle à verrouillage de phase 100 identiques au premier mode de réalisation illustré sur la figure 8 et précédemment décrit. De ce fait, ces éléments ne seront pas décrits à nouveau par la suite.

Cependant selon le second mode de réalisation illustré sur la figure 9 les oscillations du courant d'induit filtrées par le circuit 200 ne sont plus appliquées directement à l'entrée de la boucle à verrouillage de phase 100, mais transitent par le filtre à capacités commutées 400 avant de parvenir à la boucle à verrouillage de phase 100.

Comme indiqué précédemment en regard de la figure 6, le filtre à capacités commutées 400 est lui-même piloté par un VCO 500.

Le filtre à capacités commutées 400 peut être formé d'un circuit intégré type TSG 8550, alors que le VCO 500 associé est formé d'un circuit intégré type AD 537.

L'entrée pilote du circuit VCO AD 537 correspond à la borne 5 de celui-ci. Cette borne est reliée à la sortie de l'amplificateur opérationnel OP 341 par l'intermédiaire d'un étage de mise à l'échelle résistif 370. Cet étage comprend 3 résistances R 371, R 372 et R 373. Les résistances R 372 et R 373 sont connectées en série entre la sortie de OP 341 et la masse. La résistance R 371 est reliée entre le point commun aux résistances R 372-R 373 et la borne 5 du circuit VCO 500.

La sortie du VCO AD 537 correspond à la borne 14 de ce circuit. L'entrée pilote du filtre à capacités commutées TSG 8550 correspond à la borne 7 de ce circuit. De ce fait, la borne 14 du VCO AD 537 est reliée à la borne 7 du filtre à capacités commutées TSG 8550.

L'entrée du filtre à capacités commutées 400 correspond à la borne 13 de ce circuit. De ce fait, la borne 13 du filtre à capacités commutées TSG 8550 est reliée à la sortie du circuit de filtre 200, c'est-à-dire à la sortie de OP 271.

Enfin, la sortie du filtre à capacités commutées TSG 8550 est formée par la borne 11 de ce circuit. De ce fait, la borne 11 du filtre à capacités commutées TSG 8550 est reliée à la borne 2 d'entrée de la boucle à verrouillage de phase 100 composée du circuit LM 565 par l'intermédiaire de la branche série R 140-C 141.

On notera par ailleurs que de préférence, le VCO 500 pilotant le filtre à capacités commutées 400 et composé d'un circuit AD 537 a sa borne 1 reliée à la masse du montage, ses bornes 3 et 4 reliées en commun à la masse du montage par l'intermédiaire d'une résistance ajustable R 501, son entrée pilote 5 reliée à la masse du montage par l'intermédiaire d'une capacité C 502, sa borne 8 reliée à la masse du montage, ses bornes 9 et 10 interconnectées par un potentiomètre R 503, ses bornes 11 et 12 interconnectées par une capacité C 504, sa borne 13 reliée au curseur du potentiomètre R 503, d'une part, et reliée à sa borne de sortie 14 par une résistance R 505, d'autre part.

De même le filtre à capacités commutées 400 formé d'un circuit TSG 8550 a ses bornes 1 et 2 reliées en commun à une source d'alimentation positive +Vcc, ses bornes 3 et 5 reliées en commun à la masse du montage, sa borne 4 reliée à la masse par l'intermédiaire d'une capacité C 401 et à sa borne 14 par l'intermédiaire d'une résistance R 402, sa borne 6 reliée par l'intermédiaire d'une résistance R 403 à sa borne 12 et cette même borne 12 par l'intermédiaire d'une capacité C 404 à la masse, sa borne 8 reliée à la masse du montage par l'intermédiaire d'une résistance R 405, sa borne 9 connectée à la masse du montage par l'intermédiaire d'une résistance R 406, sa borne 10 reliée à la masse du montage par l'intermédiaire d'une résistance R 407, d'une part, et reliée à la borne 11 de sortie par l'intermédiaire d'une résistance ajustable R 408, d'autre part, sa borne 15 reliée à la borne 14 par l'intermédiaire d'une résistance R 409, d'une part, et à la masse par l'intermédiaire d'une résistance R 410, d'autre part.

Les résistances R 409 et R 410 déterminent le facteur d'amplification d'un étage amplificateur intégré au circuit TSG 8550. La cellule R 402-C 401 sert de filtre passe bas pour le signal issu de cet étage amplificateur intégré. La cellule R 403-C 404 sert de second étage filtre passe bas pour le signal. Les résistances R 406, R 407 et R 408 déterminent le gain de l'étage amplificateur de sortie du circuit TSG 8550.

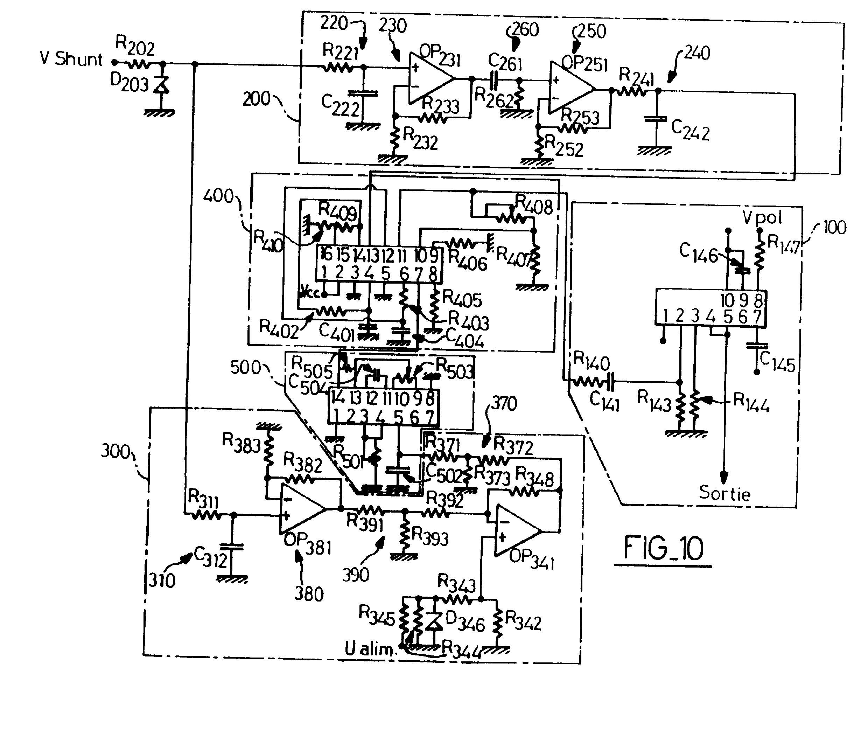

On va maintenant décrire le troisième mode de réalisation conforme à la présente invention illustré sur la figure 10 annexée.

Comme indiqué précédemment en regard de la figure 7, ce troisième mode de réalisation conforme à la présente invention comprend un circuit 200 formant filtre passe bas, un circuit 300 servant à extraire la f.c.e.m. du moteur, une boucle à verrouillage de phase 100, un filtre à capacités commutées 400 et un VCO 500 pilotant ce dernier. Le dispositif comprend de plus une cellule de protection en entrée formée d'une résistance R 202 et d'une diode zener D 203 de façon identique aux modes de réalisation illustrés sur les figures 8 et 9.

La boucle à verrouillage de phase 100, le filtre à capacités commutées 400 et le VCO pilote 500 peuvent être formés de circuits type LM 565, TSG 8550 et AD 537 de façon identique aux dispositions précédemment décrites en regard de la figure 9.

Le circuit filtre 200 peut comprendre un étage passe bas 220, un étage amplificateur 230, un étage passe haut 260, un étage amplificateur 250 et un étage passe bas 240 similaires aux dispositions du filtre passe bas 200 illustré sur la figure 8 et précédemment décrit. On notera cependant que le filtre passe bas 200 illustré sur la figure 10 diffère du filtre passe bas 200 illustré sur la figure 8 par la suppression de l'étage soustracteur d'entrée 210, la suppression de l'étage amplificateur suiveur 270 en sortie et l'inversion des étages passe bas 240 et passe haut 260.

Le circuit 300 d'extraction de la f.c.e.m. du moteur comprend connectés en cascade : un étage passe bas d'entrée 310 identique à l'étage 310 illustré sur la figure 8, un étage amplificateur 380, un étage de mise à l'échelle 390 et un étage soustracteur 340 identique à l'étage soustracteur 340 illustré sur la figure 8.

L'étage amplificateur 380 comprend un amplificateur opérationnel OP 381. L'entrée non inverseuse de OP 381 est reliée à la sortie de l'étage passe bas 310. L'entrée inverseuse de OP 381 est reliée à la masse par la résistance R 383, d'une part, et à sa sortie par la résistance R 382, d'autre part. L'étage de mise à l'échelle 390 comprend trois résistances R 391, R 392 et R 393.

Les résistances R 391 et R 393 sont connectées en série entre la sortie de OP 381 et la masse. La résistance R 392 relie le point commun aux résistances R 391, R 393 et l'entrée inverseuse de OP 341.

La sortie de OP 341 attaque par l'intermédiaire de l'étage de mise à l'échelle 370 la borne 5 du circuit VCO pilote AD 537. La borne de sortie 14 du circuit VCO AD 537 attaque l'entrée pilote 7 du filtre à capacités commutées TSG 8550. Celui-ci reçoit sur sa borne d'entrée 13 le signal issu du filtre passe bas 200, plus précisément de l'étage de sortie 240 de ce dernier. Les oscillations du courant d'induit filtrées par le filtre à capacités commutées 400 sont disponibles sur la borne de sortie 11 de ce dernier. Cette borne 11 de sortie est reliée à la borne d'entrée de la boucle à verrouillage de phase 100 (borne 2 du circuit LM 565) par l'intermédiaire de la branche série R 140-C 141.

On notera que par rapport aux figures 8 et 9 l'étage inverseur 350 et l'étage de transformation tension courant 360 sont supprimés.

La boucle à verrouillage de phase 100 n'est donc plus pilotée par un signal proportionnel à la f.c.e.m. du moteur, mais par un potentiel de référence Vpol appliqué sur son entrée 131 (borne 8 du circuit LM 565) par l'intermédiaire d'une résistance R 147.

Le potentiel Vpol et la résistance R 147 sont déterminés pour centrer la fréquence de la boucle à verrouillage de phase 100 sur la fréquence centrale des ondulations du courant d'induit.

Comme indiqué précédemment, le dispositif de mise en forme des ondulations de courant d'induit précédemment décrit, peut être intégré dans un dispositif d'exploitation comprenant des moyens de comptage du nombre d'oscillations du signal issu du dispositif de mise en forme (sortie 132 du VCO 130 sur les figures 5, 6 et 7, bornes 4 et 5 du circuit LM 565 selon les figures 8, 9 et 10) et des moyens aptes à comparer le nombre d'oscillations compté à une valeur de référence pour contrôler l'arrêt du moteur.

Les moyens de comptage et les moyens de comparaison peuvent être identiques aux dispositions décrites dans la demande de brevet FR-A-2 585 200 précitée.

Pour cette raison, les moyens de comptage et les moyens de comparaison ne seront pas décrits plus en détail par la suite.

On notera cependant que l'arrêt du moteur n'est pas instantané, c'est-à-dire que le moteur continue sa rotation, par inertie, après l'application de l'ordre d'arrêt correspondant à la coupure de sa tension d'alimentation. Pour cette raison, il est nécessaire d'anticiper l'arrêt du moteur d'un nombre d'oscillations correspondant au nombre d'oscillations obtenues pendant la phase d'inertie après l'application du signal d'arrêt. Ce nombre d'oscillations générées pendant la phase d'inertie est généralement fixe et peut être prédéterminé par essai.

Toutefois, une telle commande par anticipation peut donner lieu à une erreur de positionnement correspondant à plus ou moins une oscillation. Cette erreur en elle-même est négligeable. Elle ne l'est plus en cas d'accumulation. Pour éliminer cet inconvénient, il peut donc être utile de compter un nombre réel d'oscillations générées pendant la phase d'arrêt du moteur, pour connaître la position réelle du moteur. Il est alors nécessaire de tenir compte du fait que pendant la phase d'arrêt du moteur celui-ci fonctionne en génératrice. Pendant cette phase d'arrêt, le circuit 300 d'extraction de la force contre-électromotrice représenté sur les figures 8, 9 et 10 (qui comprend notamment un étage soustracteur 340 qui a pour but de soustraire à la tension d'alimentation du moteur un signal représentant le produit du courant moyen d'induit par la somme de la résistance du shunt et de la résistance interne du moteur à courant continu) doit être remplacé par un circuit auxiliaire extracteur de la force contre-électromotrice qui génère un signal proportionnel au produit du courant moyen d'induit par la somme de la résistance du shunt et de la résistance interne du moteur à courant continu. En d'autres termes, le circuit d'extraction de la force électromotrice 300 est commuté d'une configuration générant un signal proportionnel à $U - (R + r)i$ en une configuration générant un signal proportionnel à $(R + r)i$, U représentant la tension d'alimentation du moteur, R la résistance du shunt, r la résistance interne du moteur à courant continu et i le courant moyen d'induit, lors de la validation du signal d'arrêt du moteur.

Bien entendu la présente invention n'est pas limitée aux modes de réalisation particuliers qui viennent d'être décrits mais s'étend à toutes variantes conformes à son esprit. En particulier la référence faite aux circuits LM 565, AD 537 et TSG 8550 ne doit pas être considérée comme limitative.

**Revendications**

1. Dispositif de mise en forme des ondulations de courant d'induit d'un moteur à courant continu, caractérisé par le fait qu'il comprend une boucle à verrouillage de phase (100) recevant en entrée (III) un signal dérivé du courant d'induit du moteur et produisant en sortie (132) un signal à la fréquence fondamentale des ondulations du courant d'induit du moteur.

2. Dispositif selon la revendication 1, caractérisé par le fait qu'il comprend un filtre passe bas (200) placé en amont de la boucle à verrouillage de phase (100).

3. Dispositif selon l'une des revendications 1 ou 2, caractérisé par le fait qu'il comprend des moyens (300) aptes à générer un signal proportionnel à la f.c.e.m. du moteur et à piloter la fréquence de la boucle à verrouillage de phase (100) sur la base du signal ainsi obtenu.

4. Dispositif selon l'une des revendications 1 à 3, caractérisé par le fait qu'il comprend des moyens (300) aptes à générer un signal proportionnel à la f.c.e.m. du moteur, un oscillateur contrôlé en tension (500) piloté par le signal proportionnel à la f.c.e.m. et un filtre à capacités commutées (400) piloté par la sortie de l'oscillateur (500), placé en amont de la boucle à verrouillage de phase (100).

5. Dispositif selon l'une des revendications 1 à 4, caractérisé par le fait qu'un filtre passe bas (200) placé en amont de la boucle à verrouillage de phase (100) comprend une pluralité d'étages amplificateurs (210, 230, 250) et d'étages filtre passe bas (220, 240).

6. Dispositif selon la revendication 5, caractérisé par le fait qu'un étage filtre passe haut (260) est associé au filtre passe bas (200).

7. Dispositif selon l'une des revendications 1 à 6, caractérisé par le fait qu'il comprend des moyens (300) aptes à générer un signal proportionnel à la f.c.e.m. du moteur qui comprennent un étage soustracteur (340) aptes à retrancher un signal proportionnel au courant d'induit du moteur de la tension d'alimentation du moteur (Valim).

8. Dispositif selon l'une des revendications 1 à 7, caractérisé par le fait qu'il comprend :
   – un shunt connecté en série de l'induit du moteur,
   – un filtre passe bas (200) dont l'entrée est connectée aux bornes du shunt,
   – des moyens (300) aptes à générer un signal proportionnel à la f.c.e.m. du moteur connecté également aux bornes du shunt,
   – une boucle à verrouillage de phase (100) dont l'entrée principale (111) est reliée à la sortie du filtre passe bas, l'entrée pilote (131) est reliée à la sortie des moyens (300) générant le signal proportionnel à la f.c.e.m., et la sortie constitue la sortie du dispositif.

9. Dispositif selon l'une des revendications 1 à 7, caractérisé par le fait qu'il comprend :
   – un shunt connecté en série de l'induit du moteur,
   – un filtre passe bas (200) dont l'entrée est connectée aux bornes du shunt,
   – des moyens (300) aptes à générer un signal proportionnel à la f.c.e.m. du moteur connecté également aux bornes du shunt,
   – un oscillateur commandé en tension (VCO-500) dont l'entrée pilote est reliée à la sortie des moyens (300) générant un signal proportionnel à la f.c.e.m.,
   – un filtre à capacités commutées (400) dont l'entrée principale est reliée à la sortie du filtre passe bas alors que son entrée pilote est reliée à la sortie de l'oscillateur commandé en tension (VCO-500), et
   – une boucle à verrouillage de phase (100) dont l'entrée principale (111) est reliée à la sortie du filtre à capacités commutées (400), l'entrée pilote (131) est reliée à la sortie des moyens (300) générant le signal proportionnel à la f.c.e.m. et la sortie constitue la sortie du dispositif.

10. Dispositif selon l'une des revendications 1 à 7, caractérisé par le fait qu'il comprend :
   – un shunt connecté en série de l'induit du moteur,
   – un filtre passe bas (200) dont l'entrée est connectée aux bornes du shunt,
   – des moyens (300) aptes à générer un signal proportionnel à la f.c.e.m. du moteur connectés également aux bornes du shunt,
   – un oscillateur commandé en tension (VCO-500) dont l'entrée pilote est reliée à la sortie des moyens (300) générant un signal proportionnel à la f.c.e.m.,
   – un filtre à capacités commutées (400) dont l'entrée principale est reliée à la sortie du filtre passe bas alors que son entrée pilote est reliée à la sortie de l'oscillateur commandé en tension (VCO-500), et

– une boucle à verrouillage de phase (100) dont l'entrée principale (111) est reliée à la sortie du filtre à capacités commutées (400), l'entrée pilote (131) est reliée à un potentiel de polarisation prédéterminé, et la sortie constitue la sortie du dispositif.

11. Dispositif selon l'une des revendications 4, 9 et 10, caractérisé par le fait que le filtre à capacités commutées (400) est un filtre passe bas.

12. Dispositif selon l'une des revendications 4, 9 et 10, caractérisé par le fait que le filtre à capacités commutées (400) est un filtre passe bande.

13. Dispositif d'exploitation des ondulations de courant générées par un moteur à courant continu, caractérisé par le fait qu'il comprend :

– un dispositif de mise en forme incorporant une boucle à verrouillage de phase (100) conforme à l'une des revendications 1 à 12,
– des moyens de comptage du nombre d'oscillations du signal issu du dispositif de mise en forme, et
– des moyens aptes à comparer le nombre d'oscillations compté à une valeur de référence pour contrôler l'arrêt du moteur.

**Patentansprüche**

1. Vorrichtung zum Formatieren von Stromwellen im Ankerstrom eines Gleichstrommotors, gekennzeichnet durch die Tatsache, daß sie eine Phasenverriegelungsschleife (100) umfaßt, die am Eingang (111) ein Signal erhält, das von dem Motorankerstrom abgeleitet wird, und am Ausgang (132) ein Signal mit der Grundfrequenz der Wellen des motorankerstroms erzeugt.

2. Vorrichtung nach Anspruch 1, gekennzeichnet durch die Tatsache, daß sie ein Tiefpaßfilter (200) umfaßt, das oberhalb der Phasenverriegelungsschleife (100) angeordnet ist.

3. Vorrichtung nach einem der Ansprüche 1 oder 2, gekennzeichnet durch die Tatsache, daß sie Vorrichtungen (300) umfaßt, die geeignet sind, ein Signal proportional zur gegenelektromotorischen Kraft des Motors zu erzeugen und die Frequenz der Phasenverriegelungsschleife (100) auf der Basis des so erhaltenen Signals zu steuern.

4. Vorrichtung nach einem der Ansprüche 1 bis 3, gekennzeichnet, durch die Tatsache, daß sie Vorrichtungen (300), die geeignet sind, ein Signal proportional zur gegenelektromotorischen Kraft des Motors zu erzeugen, einen spannungsgesteuerten Oszillator (500), der von dem der gegenelektromotorischen Kraft proportionalen Signal gesteuert wird, und ein Filter (400) mit geschalteten Kapazitäten umfaßt, das durch den Ausgang des Oszillators (500) gesteuert wird, der oberhalb der Phasenverriegelungsschleife (100) angeordnet ist.

5. Vorrichtung nach einem der Ansprüche 1 bis 4, gekennzeichnet, durch die Tatsache, daß ein Tiefpaßfilter (200), das oberhalb der Phasenverriegelungsschleife (100) angeordnet ist, eine Hehrzahl von Verstärkerstufen (210, 230, 250) und Tiefpaßfilterstufen (220, 240) umfaßt.

6. Vorrichtung nach Anspruch 5, gekennzeichnet durch die Tatsache, daß eine Hochpaßfilterstufe (260) mit dem Tiefpaßfilter (200) verbunden ist.

7. Vorrichtung nach einem der Ansprüche 1 bis 6, gekennzeichnet durch die Tatsache, daß sie Vorrichtungen (300) umfaßt, die geeignet sind, ein Signal proportional zur gegenelektromotorischen Kraft des Motors zu erzeugen, und die eine Subtraktionsstufe (340) umfassen, die geeignet sind, ein Signal proportional zum Motorankerstrom von der Versorgungsspannung des Motors (Valim) abzuziehen.

8. Vorrichtung nach einem der Ansprüche 1 bis 7, gekennzeichnet durch die Tatsache, daß sie umfaßt:

– einen in Reihe mit dem Motoranker verbundenen Nebenschluß,
– ein Tiefpaßfilter (200), dessen Eingang mit den Anschlüssen des Nebenschlusses verbunden sind,
– Vorrichtungen (300), die geeignet sind, ein Signal proportional zur gegenelektromotorischen Kraft des Motors zu erzeugen, und ebenfalls mit den Anschlüssen des Nebenschlusses verbunden sind,
– eine Phasenverriegelungsschleife (100), deren Haupteingang (111) mit dem Ausgang des Tiefpaßfilters verbunden ist, deren Steuerungseingang (131) mit dem Ausgang der Vorrichtungen (300) verbunden ist, die ein Signal proportional zur gegenelektromotorischen Kraft erzeugen, und deren hingang den Ausgang der Vorrichtung bildet.

9. Vorrichtung nach einem der Ansprüche 1 bis 7, gekennzeichnet durch die Tatsache, daß sie umfaßt:

– einen in Reihe mit dem Motoranker verbundenen Nebenschluß,

– ein Tiefpaßfilter (200 ), dessen Eingang mit den Anschlüssen des Nebenschlusses verbunden sind,

– Vorrichtungen (300), die geeignet sind, ein Signal proportional zur gegenelektromotorischen Kraft des Motors zu erzeugen, und ebenfalls mit den Anschlüssen des Nebenschlusses verbunden sind,

– einen spannungsgesteuerten Oszillator (VCO-500), dessen Steuerungseingang mit dem Ausgang der Vorrichtungen (300) verbunden ist, die ein Signal proportional zur elektromotorischen Kraft erzeugen,

– ein Filter mit geschalteten Kapazitäten (400), dessen Haupteingang mit dem Ausgang des Tiefpaßfilters verbunden ist, während sein Steuerungseingang mit dem Ausgang des spannungsgesteuerten Oszillators (VCO-500) verbunden ist, und

– eine Phasenverriegelungsschleife (100), deren Haupteingang (111) mit dem Ausgang des Filters mit geschalteten Kapazitäten (400) verbunden ist, deren Steuerungseingang (131) mit dem Ausgang der Vorrichtungen (300) verbunden ist, die ein Signal proportional zur gegenelektromtorischen Kraft erzeugen, und deren Ausgang den Ausgang der Vorrichtung bildet.

10. Vorrichtung nach einem der Ansprüche 1 bis 7, gekennzeichnet durch die Tatsache, daß sie umfaßt:

– einen in Reihe mit dem Motoranker verbundenen Nebenschluß,

– ein Tiefpaßfilter (200), dessen Eingang mit den Anschlüssen des Nebenschlusses verbunden sind,

– Vorrichtungen (300), die geeignet sind, ein Signal proportional zur gegenelektromotorischen Kraft des Motors zu erzeugen, und ebenfalls mit den Anschlüssen des Nebenschlusses verbunden sind,

– einen spannungsgesteuerten Oszillator (VCO-500), dessen Steuerungseingang mit dem Ausgang der Vorrichtungen (300) verbunden ist, die ein Signal proportional zur elektromotorischen Kraft erzeugen,

– ein Filter mit geschalteten Kapazitäten (400), dessen Haupteingang mit dem Ausgang des Tiefpaßfilters verbunden ist, während sein Steuerungseingang mit dem Ausgang des spannungsgesteuerten Oszillators (VCO-500) verbunden ist, und

– eine Phasenverriegelungsschleife (100), deren Haupteingang (111) mit dem Ausgang des Filters mit geschalteten Kapazitäten (400) verbunden ist, deren Steuerungseingang (131) mit einem vorgegebenen Polarisierungspotential verbunden ist, und deren Ausgang den Ausgang der Vorrichtung bildet.

11. Vorrichtung nach einem der Ansprüche 4, 9 und 10, gekennzeichnet durch die Tatsache, daß das Filter mit geschalteten Kapazitäten (400) ein Tiefpaßfilter ist.

12. Vorrichtung nach einem der Ansprüche 4, 9 und 10, gekennzeichnet durch die Tatsache, daß das Filter mit geschalteten Kapazitäten (400) ein Bandpaßfilter ist.

13. Vorrichtung zum Auswerten der Stromwellen, die von einem Gleichstrommotor erzeugt werden, gekennzeichnet durch die Tatsache, daß sie umfaßt:

– eine Vorrichtung zum Formatieren mit einer Phasenverriegelungsschleife (100) nach einem der Ansprüche 1 bis 12,

– Zählvorrichtungen für die Anzahl der Oszillationen des von der Formatierungsvorrichtung erzeugten Signals, und

– Vorrichtungen, die geeignet sind, die gezählte Anzahl von Oszillationen mit einem Bezugswert zu vergleichen, um das Anhalten des Motors zu steuern.

**Claims**

1/ A circuit for shaping ripple in D.C. motor armature current, the circuit being characterized by the fact that it includes a phase-locked loop (100) receiving in input (111) a signal corresponding to the motor armature current and providing at output (132) a signal at the fundamental frequency of the motor armature current ripple.

2/ A circuit according to claim 1, characterized by the fact that it includes a lowpass filter (200) connected upstream from the phase-locked loop (100).

3/ A circuit according to claim 1 or 2, characterized by the fact that it includes means (300) suitable for generating a signal proportional to the back-e.m.f. of the motor and for controlling the frequency of the phase-locked loop (100) on the basis of the signal obtained in this way.

4/ A circuit according to any one of claims 1 to 3, characterized by the fact that it includes means (300) suitable for generating a signal proportional to the back-e.m.f. of the motor, a voltage controlled oscillator (500) controlled by the signal proportional to the back-e.m.f., and a switched capacitor filter (400) controlled by the output from the oscillator (500) and connected upstream from the phase-locked loop (100).

5/ A circuit according to any one of claims 1 to 4, characterized by the fact that a lowpass filter (200) connected upstream from the phase-locked loop (100) comprises a plurality of amplifier stages (210, 230, 250) and lowpass filter stages (220, 240).

6/ A circuit according to claim 5, characterized by the fact that a highpass filter stage (260) is associated with the lowpass filter (200).

7/ A circuit according to any one of claims 1 to 6, characterized by the fact that it includes means (300) suitable for generating a signal proportional to the back-e.m.f. of the motor and including a subtractor stage (340) suitable for subtracting a signal proportional to the motor armature current from the motor feed voltage (Vfeed).

8/ A circuit according to any one of claims 1 to 7, characterized by the fact that it comprises:

a shunt resistance connected in series with the motor armature;

a lowpass filter (200) whose input is connected across the terminals of the shunt;

means (300) suitable for generating a signal proportional to the back-e.m.f. of the motor and also connected across the terminals of the shunt; and

a phase-locked loop (100) whose main input (111) is connected to the output of the lowpass filter, whose control input (131) is connected to the output of the means (300) for generating a signal proportional to the back-e.m.f., and whose output constitutes the output of the circuit.

9/ A circuit according to any one of claims 1 to 7, characterized by the fact that it comprises:

a shunt resistance connected to the series with the motor armature;

a lowpass filter (200) whose input is connected across the terminals of the shunt;

means (300) suitable for generating a signal proportional to the back-e.m.f. of the motor and also connected across the terminals of the shunt;

a voltage controlled oscillator (VCO-500) whose control input is connected to the output of the means (300) for generating a signal proportional to the back-e.m.f.;

a switched capacitor filter (400) whose main input is connected to the output from the lowpass filter and whose control input is connected to the output from the voltage controlled oscillator (VCO-500); and

a phase-locked loop (100) whose main input (111) is connected to output of the switched capacitor filter (400), whose control input (131) is connected to the output of the means (300) for generating a signal proportional to the back-e.m.f., and whose output constitutes the output of the circuit.

10/ A circuit according to any one of claims 1 to 7, characterized by the fact that it comprises:

a shunt resistance connected to the series with the motor armature;

a lowpass filter (200) whose input is connected across the terminals of the shunt;

means (300) suitable for generating a signal proportional to the back-e.m.f. of the motor and also connected across the terminals of the shunt;

a voltage controlled oscillator (VCO-500) whose control input is connected to the output of the means (300) for generating a signal proportional to the back-e.m.f.;

a switched capacitor filter (400) whose main input is connected input is connected to the output from the voltage controlled oscillator (VCO-500); and

a phase-locked loop (100) whose main input (111) is connected to the output of the switched capacitor filter (400), whose control input (131) is connected to a predetermined bias voltage; and whose output constitutes the output of the circuit.

11/ A circuit according to any one of claims 4, 9, and 10,
characterized by the fact that the switched capacitor filter (400) is a lowpass filter.

12/ A circuit according to any one of claims 4, 9, and 10, characterized by the fact that the switched capacitor filter (400) is a bandpass filter.

13/ A circuit for making use of current ripple generated by a D.C. motor, the circuit being characterized by the fact that it comprises:

a shaping circuit including a phase-locked loop (100) in accordance with any one of claims 1 to 12;

means for counting the number of oscillations in the signal delivered by the shaping circuit; and

means suitable for comparing the counted number of oscillations with a reference value for controlling the stopping of the motor.

FIG_1

FIG_2

## FIG _3
## Etat de la technique

+Vcc

Moteur

Shunt

Filtrage

Passe-
bas

Trigger

Sortie

## FIG _4
## Etat de la technique

Moteur

Shunt

K1

VCO

Filtre
capacités
commutées

K2

Comp.
φ

+V ref.

Asservis-
-sement

f consigne

## FIG_5

Moteur

Shunt

Filtrage passe-bas 200

Extrac--tion F.C.E.M. 300

Signal filtre

Sortie

100 110 PLL

111

Comp. φ 110

112

Passe-bas 120

VCO 130

132

F.C.E.M.

131

## FIG_6

Moteur

Shunt

Filtrage passe-bas 200

Extrac--tion F.C.E.M. 300

Filtre capacités commutées 400

VCO 500

Sortie

100 PLL

111

Comp. φ 110

112

Passe bas 120

VCO 130

132

131

## FIG_7

Moteur

Shunt

Filtrage passe-bas 200

Extrac--tion FCEM 300

Filtre capacités commutées 400

VCO 500

Sortie

100 PLL

111

Comp. φ 110

112

Passe bas 120

VCO 130

132

131

Vpol

FIG_8

FIG_9

FIG_10

EP 0 333 572 B1